(19) Europäisches Patentamt
European Patent Office
Office européen des brevets

(11) **EP 3 199 453 B1**

(12) **FASCICULE DE BREVET EUROPEEN**

(45) Date de publication et mention
de la délivrance du brevet:
**18.04.2018   Bulletin 2018/16**

(51) Int Cl.:
**B64C 25/56** *(2006.01)*          **B64C 27/04** *(2006.01)*

(21) Numéro de dépôt: **17150445.9**

(22) Date de dépôt: **05.01.2017**

(54) **PROCEDE DE COMMANDE POUR COMMANDER UN SYSTEME DE FLOTTABILITE POUR AERONEF, SYSTEME DE FLOTTABILITE ET AERONEF**

STEUERVERFAHREN ZUM STEUERN EINES AUFTRIEBSSYSTEMS FÜR EIN LUFTFAHRZEUG, AUFTRIEBSSYSTEM SOWIE LUFTFAHRZEUG

A CONTROL METHOD FOR CONTROLLING A BUOYANCY SYSTEM FOR AN AIRCRAFT, A BUOYANCY SYSTEM, AND AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **29.01.2016   FR 1600153**

(43) Date de publication de la demande:
**02.08.2017   Bulletin 2017/31**

(73) Titulaire: **Airbus Helicopters**
**13725 Marignane Cedex (FR)**

(72) Inventeurs:
• **DELORME, Louis**
**13820 ENSUES LA REDONNE (FR)**
• **BERTIN, Didier**
**13009 MARSEILLE (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**WO-A2-2006/046038      FR-A1- 2 959 725**
**FR-A1- 2 997 923        US-A1- 2011 226 898**
**US-A1- 2013 327 890      US-A1- 2014 124 620**

**Description**

La présente invention concerne un procédé de commande pour commander un système de flottabilité pour aéronef, ce système de flottabilité et un aéronef muni de ce système de flottabilité.

Dès lors, l'invention se situe dans le domaine technique des systèmes de flottabilité permettant l'amerrissage et la stabilité à flot d'un aéronef, et plus particulièrement un aéronef à voilure tournante.

Un tel système de flottabilité participe à la flottaison et à la stabilité d'un aéronef suite à un amerrissage. Le système de flottabilité peut être par exemple utilisé suite à un amerrissage forcé pour permettre l'évacuation des occupants de cet aéronef. Tous les appareils voués aux missions de transport de personnes dans une zone maritime sont équipés en principe d'un tel système de flottabilité.

Des règlements de certification précisent d'ailleurs qu'un aéronef doit pouvoir amerrir et être stable sur l'eau avec son système de flottabilité. La stabilité doit être avérée pour des états de surface libre de l'eau et des niveaux de vent qui sont définis dans ces règlements de certification.

Ces états de surface libre de l'eau sont aussi nommés « état de mer », et s'appliquent à toute surface liquide. Le terme « amerrissage » couvre aussi le posé d'un aéronef sur toute surface libre d'eau, que ce soit sur la mer ou sur un lac par exemple.

Un système de flottabilité peut comprendre des flotteurs gonflables. Ces flotteurs gonflables peuvent comprendre des outres gonflées par un moyen de gonflage explosif ou électrique par exemple.

Dès lors, le système de flottabilité comprend un moyen de commande manuel qui est relié au moyen de gonflage pour requérir le gonflage des flotteurs si nécessaire.

Un tel moyen de commande manuel peut comprendre un organe manuel manoeuvré manuellement par un pilote. Par exemple, un bouton est placé sur un manche manoeuvré par un pilote, ce bouton étant relié à un gonfleur. La manoeuvre du bouton induit alors le gonflage des flotteurs.

Ce moyen de commande manuel présente l'avantage de pouvoir être activé en vol par un pilote, et donc préalablement à l'amerrissage.

Cependant, ce moyen de commande manuel présente l'inconvénient d'impliquer le pilote dans une situation stressante où ce pilote a potentiellement une charge de travail élevée.

En outre, les flotteurs risquent d'être endommagés lors de l'amerrissage, en fonction du choc reçu.

Enfin, lorsque les flotteurs sont gonflés en vol, ces flotteurs sont susceptibles de dégrader la stabilité de l'aéronef en vol.

En outre, un système de flottabilité peut comprendre un moyen de commande automatique relié au moyen de gonflage pour requérir le gonflage des flotteurs si nécessaire.

Un tel moyen de commande automatique peut comprendre des capteurs d'immersion reliés à un gonfleur. Chaque capteur d'immersion vise à détecter si l'aéronef est au moins partiellement immergé, et donc si l'aéronef a amerri. Par exemple, lorsqu'au moins deux capteurs d'immersion détectent la présence d'eau, les flotteurs sont éventuellement gonflés.

Ce moyen de commande automatique présente l'avantage de ne pas impliquer le pilote. Le gonflage des flotteurs est en effet conditionné à l'immersion éventuelle de capteurs d'immersion.

De plus, les flotteurs sont de fait dégonflés en vol. Dès lors, les flotteurs ne risquent pas d'être endommagés lors de l'amerrissage. De plus, les flotteurs n'ont pas d'influence sur la stabilité de l'aéronef en vol avant l'amerrissage.

Cependant, le gonflage des flotteurs intervient de fait lorsque l'aéronef est à flot. Lorsque les flotteurs se déploient en étant gonflés, les flotteurs risquent d'altérer la stabilité de l'aéronef sur l'eau.

En outre, la durée du gonflage doit être minimisée pour éviter que l'aéronef ne coule avant le gonflage des flotteurs.

Les documents FR 2959725, FR 2997923, WO 2006/046038, US 2013/327890, US 2014/124620 et US 2011/226898 sont connus.

Le document FR 2959725 décrit un procédé de commande d'un système de flottabilité pour aéronef comportant des moyens de déclenchement manuel et des moyens de déclenchement automatique dudit système de flottabilité. Ce procédé propose de prendre en compte au moins un paramètre d'attitude de l'aéronef pour piloter les moyens de déclenchement automatique. Selon ce procédé, des angles de roulis et de tangage sont pris en compte pour l'activation des moyens de déclenchement automatique.

La présente invention a alors pour objet de proposer un procédé visant à limiter certains inconvénients précités.

L'invention vise donc un procédé de commande pour commander un système de flottabilité pour aéronef, cet aéronef présentant à chaque instant un vecteur de vitesse sol ayant dans un référentiel une composante de vitesse courante en élévation selon un axe en élévation dirigé selon la pesanteur et une composante de vitesse courante horizontale dans un plan horizontal perpendiculaire à ladite pesanteur, le système de flottabilité comportant au moins un flotteur et un moyen de gonflage pour gonfler chaque flotteur.

Ce procédé comporte un mode de gonflage automatique pour gonfler automatiquement en vol chaque flotteur présentant les étapes suivantes:

- durant une étape de prédiction d'un impact à venir avec une surface liquide, un calculateur détermine si une condition d'amerrissage prédéterminée est vérifiée,

- durant une étape de caractérisation de l'impact à venir, au moins une composante prédite d'une vitesse d'amerrissage est déterminée, chaque composante prédite représentant une vitesse estimée de l'aéronef lors dudit impact selon la pesanteur ou dans un plan d'impact perpendiculaire à la pesanteur,

- durant une étape de gonflage automatique, chaque flotteur est automatiquement gonflé en vol par ledit moyen de gonflage lorsqu'au moins les deux conditions suivantes sont simultanément remplies :

  ◦ ladite condition d'amerrissage est vérifiée,

  ◦ chaque composante prédite déterminée est inférieure à un seuil de vitesse correspondant.

Ce procédé permet donc de gonfler les flotteurs en vol selon des conditions prédéterminées.

En effet, le calculateur met en oeuvre de manière répétitive les étapes décrites précédemment selon une fréquence de traitement.

A chaque instant de calcul, le calculateur évalue une condition d'amerrissage. Lorsque cette condition d'amerrissage est vérifiée, le calculateur en déduit que l'aéronef va amerrir à court terme en impactant une surface liquide.

L'expression « condition d'amerrissage est vérifiée » signifie que les conditions prédéterminées signifiant qu'un amerrissage doit se produire à court terme sont présentes à l'instant de calcul considéré.

De plus, le calculateur évalue la vitesse d'impact que devrait atteindre l'aéronef lors d'un éventuel impact. Par suite, le calculateur évalue au moins une composante prédite d'un vecteur vitesse sol prédit de l'aéronef.

Dès lors, si la condition d'amerrissage est vérifiée et si chaque composante prédite est inférieure à un seuil de vitesse, le calculateur en déduit qu'un amerrissage va se produire à une vitesse ne risquant pas d'endommager des flotteurs gonflés.

Par suite, le moyen de gonflage est activé pour gonfler les flotteurs.

Ce procédé permet donc d'autoriser le gonflage des flotteurs en vol dans des conditions prédéterminées. Si ces conditions prédéterminées ne sont pas remplies, le gonflage des flotteurs en vol n'est pas ordonné. Dès lors, ce procédé ne risque pas d'induire une destruction des flotteurs si l'aéronef impacte la surface liquide à une vitesse élevée.

Le procédé peut de plus comporter une ou plusieurs des caractéristiques qui suivent.

Par suite, le procédé peut appliquer au moins un mode de gonflage complémentaire concomitamment à l'application du mode de gonflage automatique en vol, au moins un mode de gonflage complémentaire étant à choisir dans une liste comprenant un mode de gonflage manuel durant lequel le gonflage d'un flotteur est commandé manuellement par un individu et un mode de gonflage automatique après impact durant lequel le gonflage d'un flotteur est commandé par au moins un capteur d'immersion.

Par conséquent, si les flotteurs ne sont pas gonflés automatiquement en vol parce que les conditions requises ne sont pas remplies, ces flotteurs peuvent être gonflés soit manuellement à tout moment via un organe manuel de commande, soit automatiquement après l'amerrissage via au moins un capteur d'immersion.

Par ailleurs, avant de gonfler un flotteur, le calculateur peut déterminer si le gonflage d'un flotteur est autorisé en surveillant un moyen d'autorisation de gonflage manoeuvrable manuellement, aucun flotteur ne pouvant être gonflé si le moyen d'autorisation de gonflage n'est pas manoeuvré.

L'aéronef peut comprendre un moyen d'autorisation de gonflage permettant d'armer ou de désarmer le système de flottabilité. Tous les modes de gonflage sont donc inactifs lorsque le système de flottabilité est désarmé. A l'inverse, tous les modes de gonflage sont donc actifs lorsque le système de flottabilité est armé au moins en manoeuvrant le moyen d'autorisation de gonflage. Le moyen d'autorisation de gonflage permet donc d'éviter un gonflage intempestif.

Cette caractéristique permet d'inhiber le système de flottabilité par exemple lors du survol d'une surface solide ou lors d'une phase de vol de croisière réalisée à une vitesse importante.

Par ailleurs, l'aéronef comportant une unité de navigation mémorisant une route suivie, cette route comprenant un segment de décollage ainsi qu'au moins un segment de croisière et un segment d'atterrissage, le calculateur peut déterminer si le gonflage d'un flotteur est autorisé en surveillant la position de l'aéronef par rapport à la route. Le mode de gonflage automatique en vol est inhibé si l'aéronef se trouve dans le segment de décollage ou le segment d'atterrissage.

Le gonflage automatique en vol peut être proscrit durant une phase de décollage et d'atterrissage pour ne pas perturber le vol de l'aéronef dans ces zones de vol particulières.

Par suite, le calculateur peut communiquer avec un système de localisation pour déterminer la position de l'aéronef par rapport à la route suivie, et inhiber le cas échéant le mode de gonflage automatique en vol.

De même, l'aéronef comportant un rotor de sustentation entraîné en rotation par au moins un moteur hors phase d'autorotation, le calculateur peut surveiller le fonctionnement du rotor de sustentation pour déterminer si l'aéronef est dans une phase d'autorotation, le mode de gonflage automatique en vol étant inhibé durant cette phase d'autorotation.

Par exemple, le calculateur compare la vitesse de rotation du rotor de sustentation à la vitesse de rotation d'une turbine de détente de chaque moteur. Si la vitesse de rotation du rotor de sustentation est supérieure à la vitesse de rotation d'une turbine de détente, le calculateur en déduit que l'aéronef effectue une phase de vol en autorotation et inhibe le mode de gonflage automatique en vol par sécurité.

Par ailleurs, durant l'étape de prédiction d'un impact à venir avec une surface liquide, le calculateur détermine si l'aéronef se déplace vers une surface liquide, le flotteur étant automatiquement gonflé en vol durant l'étape de gonflage automatique par le moyen de gonflage lorsque les trois conditions suivantes sont simultanément remplies :

   ∘ ladite condition d'amerrissage est vérifiée,

   ∘ l'aéronef se déplace vers une surface liquide,

   ∘ chaque composante prédite déterminée est inférieure au seuil de vitesse correspondant.

Cette variante propose de surveiller non pas deux conditions mais trois conditions.

Par exemple, un système de positionnement muni d'une centrale inertielle et/ou d'un moyen de localisation par satellites voire d'une radiosonde permet de déterminer le sens de déplacement de l'aéronef en élévation.

Durant l'étape de prédiction d'un impact à venir avec une surface liquide, le calculateur considère éventuellement que l'aéronef se déplace vers une surface liquide si ladite composante de vitesse courante en élévation est dirigée vers la surface liquide.

Par ailleurs, à chaque instant de calcul ladite condition d'amerrissage est vérifiée lorsque l'inégalité suivante est vérifiée :

$$\frac{1}{2}\,M\,Vz0^2 + Mg\,h0 > h0\,Fzmax$$

où « M » représente une masse courante de l'aéronef audit instant de calcul, « $Vz0^2$ » représente le carré de ladite composante de vitesse courante en élévation audit instant de calcul, « g » représente l'accélération de la pesanteur, « h0 » représente la hauteur de l'aéronef audit instant de calcul, « Fzmax » représente une constante relative à une portance maximale de l'aéronef, « > » représente le signe supérieur d'une inégalité, « + » représente le signe de l'addition.

Un système de positionnement muni d'une centrale inertielle et/ou d'un moyen de localisation par satellites et d'une radiosonde permet de déterminer la vitesse courante en élévation et la hauteur de l'aéronef à chaque instant de calcul.

La constante relative à une portance maximale de l'aéronef est en outre déterminée par essais et/ou simulations et/ ou calcul par le constructeur.

Par suite, si cette inégalité est vérifiée à un instant de calcul le calculateur en déduit que l'aéronef va amerrir à court terme.

Cette relation n'est pas évidente car cette équation résulte d'hypothèses prises par la demanderesse.

En effet, l'énergie totale avant impact de l'aéronef prend la forme suivante :

$$\frac{1}{2}M(Vx0^2 + Vz0^2) + Mg\,h0$$

où « M » représente une masse courante de l'aéronef audit instant de calcul, « $Vz0^2$ » représente le carré de ladite composante de vitesse courante en élévation audit instant de calcul, « $Vx0^2$ » représente le carré de la composante de vitesse courante horizontale de l'aéronef audit instant de calcul, « g » représente l'accélération de la pesanteur, « h0 » représente la hauteur de l'aéronef audit instant de calcul, « + » représente le signe de l'addition.

En supposant constante la portance de l'aéronef et en appliquant des hypothèses simplificatrices et en supposant que le giravion est dans une phase de descente, un impact va survenir si la relation intermédiaire suivante est vérifiée :

$$\frac{1}{2}M(Vx0^2 + Vz0^2) + Mg\, h0 > \frac{1}{2}M\,(Vximpact^2) + h0\, Fzmax$$

où « M » représente une masse courante de l'aéronef audit instant de calcul, « $Vz0^2$ » représente le carré de ladite composante de vitesse courante en élévation audit instant de calcul, « $Vx0^2$ » représente le carré de la composante de vitesse courante horizontale de l'aéronef audit instant de calcul « g » représente l'accélération de la pesanteur, « $Vximpact^2$ » représente le carré de la composante horizontale de la vitesse sol de l'aéronef lors de l'impact, « Fzmax » représente une constante relative à une portance maximale de l'aéronef, « h0 » représente la hauteur de l'aéronef audit instant de calcul, « + » représente le signe de l'addition.

En supposant que la composante courante de vitesse horizontale de la vitesse de l'aéronef ne varie pas lors de la descente de l'aéronef, la relation intermédiaire précédente est égale à l'inéquation décrite précédemment.

En outre, l'aéronef comprenant au moins un moteur et un système de carburant qui alimente en carburant chaque moteur selon un débit de carburant, la masse courante peut être déterminée à chaque instant de calcul en réalisant les étapes suivantes :

- détermination de la masse initiale de l'aéronef avant le démarrage des moteurs,
- détermination d'une masse consommée du carburant consommé depuis ledit démarrage,
- détermination de la masse courante de l'aéronef audit instant de calcul en soustrayant la masse consommée à la masse initiale.

La masse initiale peut être mesurée sur une balance au sol, ou encore être estimée à partir d'une masse à vide prédéterminée de l'aéronef et d'une estimation de la masse du chargement de l'aéronef.

La masse consommée peut en outre être déterminée à partir du débit de carburant alimentant les moteurs et de la masse volumique de ce carburant.

Par ailleurs, chaque composante prédite à déterminer est éventuellement à choisir dans une liste comprenant une composante prédite horizontale et une composante prédite en élévation respectivement dans le plan d'impact et selon la pesanteur.

Le calculateur peut comparer soit une composante prédite horizontale à un premier seuil de vitesse, soit une composante prédite en élévation à un deuxième seuil de vitesse, soit la composante prédite horizontale au premier seuil de vitesse et la composante prédite en élévation au deuxième seuil de vitesse.

Eventuellement et selon une première variante, à chaque instant de calcul, au moins une composante prédite de la vitesse d'amerrissage selon une direction dite « direction particulière » par commodité est déterminée en réalisant les étapes suivantes :

- détermination du temps estimé restant à s'écouler avant ledit impact avec la surface liquide en résolvant l'équation suivante :

$$Gamma\,\frac{\Delta T^2}{2} + V0\,\Delta T + h0 = 0$$

où « gamma » représente une composante de l'accélération courante de l'aéronef selon ladite direction particulière, « $\Delta T$ » représente ledit temps estimé, « $\Delta T^2$ » représente le carré dudit temps estimé, « V0 » représente ladite composante de vitesse courante de l'aéronef selon ladite direction particulière audit instant de calcul, « h0 » représente la hauteur de l'aéronef audit instant de calcul,

- détermination de la composante prédite de la vitesse d'amerrissage prédite selon ladite direction particulière en fonction dudit temps estimé selon l'équation suivante :

$$Vimpact = gamma\,\Delta T + V0$$

où « Vimpact » représente ladite composante prédite de la vitesse d'amerrissage selon ladite direction particulière.

L'expression « direction particulière » peut représenter la direction de la pesanteur ou le plan d'impact horizontal. Dès lors, la composante prédite horizontale et/ou la composante prédite en élévation peuvent être déterminées de cette manière.

En effet, la composante prédite horizontale peut être déterminée à l'aide des deux équations suivantes :

$$\text{Gammax}\,\frac{\Delta T^2}{2} + V0x\,\Delta T + h0 = 0$$

$$\text{Vimpactx} = \text{gammax}\,\Delta T + V0$$

où « gammax » représente une composante de l'accélération courante horizontale de l'aéronef dans le plan d'impact, « $\Delta T$ » représente ledit temps estimé, « $\Delta T^2$ » représente le carré dudit temps estimé, « V0x » représente une composante de la vitesse courante horizontale de l'aéronef dans le plan d'impact, « h0 » représente la hauteur de l'aéronef audit instant de calcul, « Vimpactx » représente ladite composante prédite horizontale de la vitesse d'amerrissage dans le plan d'impact.

De même, la composante prédite en élévation peut être déterminée à l'aide des deux équations suivantes :

$$\text{Gammaz}\,\frac{\Delta T^2}{2} + V0z\,\Delta T + h0 = 0$$

$$\text{Vimpactz} = \text{gammaz}\,\Delta T + V0$$

où « gammaz » représente une composante de l'accélération courante en élévation de l'aéronef selon l'axe en élévation de l'aéronef, « $\Delta T$ » représente ledit temps estimé, « $\Delta T^2$ » représente le carré dudit temps estimé, « V0z » représente une composante de la vitesse courante en élévation de l'aéronef selon ledit axe en élévation, « h0 » représente la hauteur de l'aéronef audit instant de calcul, « Vimpactz » représente ladite composante prédite en élévation de la vitesse d'amerrissage selon ledit axe en élévation.

Selon une deuxième variante, à chaque instant de calcul, au moins une composante prédite de la vitesse d'amerrissage selon une direction particulière peut être rendue égale à la composante de vitesse courante selon cette direction particulière.

Par suite, la composante prédite en élévation de la vitesse d'amerrissage selon l'axe en élévation peut être rendue égale à la composante de la vitesse courante en élévation selon cet axe en élévation. De même, la composante prédite horizontale de la vitesse d'amerrissage dans le plan d'impact horizontal peut être rendue égale à la composante de la vitesse courante horizontale dans le plan horizontal.

La première variante et la deuxième variante peuvent être implémentées sur un même aéronef. Par exemple, le calculateur utilise par défaut la première variante, la deuxième variante étant uniquement utilisée si la première variante ne fournit aucun résultat.

En outre, le seuil de vitesse correspondant à la composante prédite horizontale peut être égal à 30 noeuds (Kts), le seuil de vitesse correspondant à la composante prédite en élévation pouvant être égal à 1.5 mètre par seconde.

Pour mémoire, un noeud correspond à 0,514 mètre par second, 30 noeuds valant alors 15.42 mètres par seconde.

La demanderesse note que des flotteurs gonflés peuvent supporter un impact se produisant avec une vitesse d'impact respectant ces seuils de vitesse.

Outre un procédé, l'invention vise un système de flottabilité comportant au moins un flotteur et un moyen de gonflage pour gonfler chaque flotteur, le système de flottabilité ayant un système de commande pour donner un ordre de gonflage de chaque flotteur au moyen de gonflage.

Ce système de commande est muni d'un calculateur qui applique le procédé décrit précédemment.

En outre, l'invention vise un aéronef comportant ce système de flottabilité. Par exemple, l'aéronef peut être un giravion.

Outre un calculateur, le système de commande peut comporter une pluralité d'équipements. Le système de commande peut ainsi comprendre au moins des équipements suivants :

- un système de positionnement muni d'une centrale inertielle et/ou d'un moyen de localisation par satellites voire d'une radiosonde,

- un système de mesure de vitesse de rotation comprenant un capteur d'une vitesse de rotation d'un rotor et/ou d'au moins un capteur de mesure d'une vitesse de rotation d'une turbine de détente d'un moteur,

- au moins un capteur d'immersion,

- un organe de commande manoeuvrable manuellement pour ordonner le gonflage de chaque flotteur,

- un moyen d'autorisation de gonflage manoeuvrable manuellement pour armer/désarmer le système de flottabilité,

- un système de détermination permettant d'estimer la masse de l'aéronef, ce système étant muni par exemple d'un débitmètre et d'une mémoire mémorisant une masse à vide et une masse volumique du carburant utilisé,

- une unité de navigation.

L'invention et ses avantages apparaîtront avec plus de détails dans le cadre de la description qui suit avec des exemples donnés à titre illustratif en référence aux figures annexées qui représentent :

- la figure 1, un schéma présentant un aéronef muni d'un système de flottabilité selon l'invention,

- la figure 2, un schéma présentant un système de flottabilité selon l'invention,

- la figure 3, un schéma montrant un aéronef selon l'invention en vol préalablement à un amerrissage, et

- la figure 4, un schéma explicitant le procédé selon l'invention.

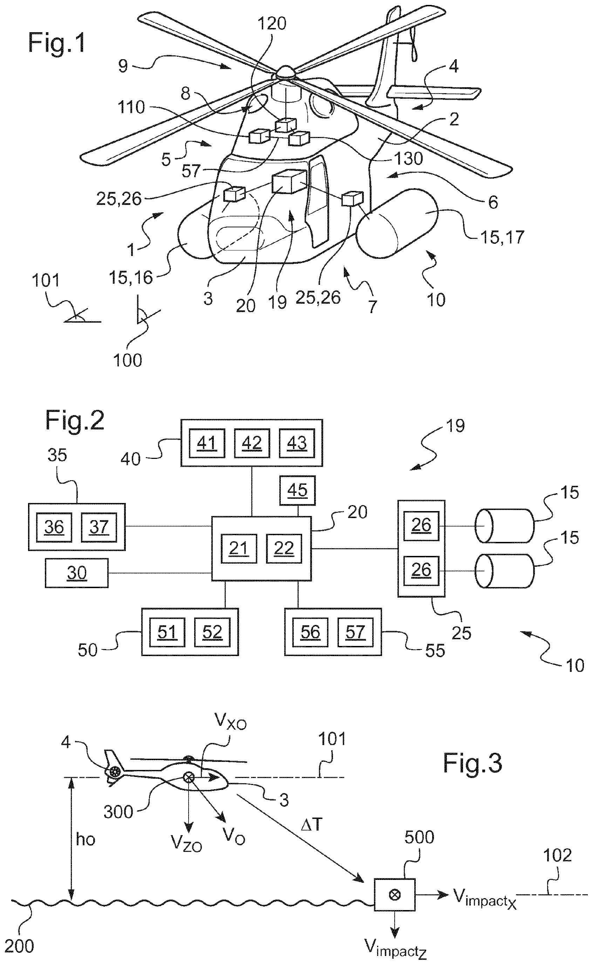

La figure 1 présente un aéronef 1 muni d'un système de flottabilité 10 selon l'invention.

Cet aéronef 1 comprend un fuselage 2 s'étendant longitudinalement d'une extrémité avant 3 vers une extrémité arrière 4. De plus, le fuselage 2 s'étend transversalement d'un flanc gauche 5 vers un flanc droit 6 de part et d'autre d'un plan de symétrie antéropostérieur 100, et en élévation d'une partie basse 7 vers une partie haute 8.

La partie basse est classiquement munie d'un train d'atterrissage, alors que la partie haute peut porter un rotor de sustentation 9 voire de propulsion. La partie basse peut inclure une barque délimitée notamment par le plancher d'une cabine et l'enveloppe extérieure du fuselage.

Le rotor de sustentation 9 est mis en rotation par au moins un moteur 110 au travers d'une boîte de transmission de puissance 120. Ce moteur 110 peut être un turbomoteur muni d'une turbine de détente solidaire d'un arbre de travail relié par une chaîne mécanique à la boîte de transmission de puissance 120.

Le moteur est alimenté en carburant par au moins un réservoir d'un système de carburant 130. Eventuellement, un débitmètre 57 permet de mesurer le débit de carburant alimentant les moteurs.

Cet aéronef 1 est de plus pourvu d'un système de flottabilité 10 selon l'invention afin de pouvoir amerrir.

Un tel système de flottabilité est pourvu d'au moins un flotteur 15. Par exemple, le système de flottabilité est pourvu d'au moins deux flotteurs 15 agencés de part et d'autre du fuselage 2 de l'aéronef. Ainsi, un flotteur 15 dit « flotteur gauche 16 » est disposé du côté du flanc gauche de l'aéronef, alors qu'un flotteur 15 dit « flotteur droit 17» est disposé du côté du flanc droit de l'aéronef.

Les flotteurs 15 peuvent être appariés. Dès lors, les flotteurs 15 d'une paire peuvent être disposés symétriquement de part et d'autre du plan antéropostérieur 100 de symétrie de l'aéronef dans une position stable de l'aéronef.

La figure 1 illustre un aéronef qui comporte une unique paire de flotteurs 15. Toutefois, l'aéronef peut comporter plus deux flotteurs. Par exemple, l'aéronef comporte quatre flotteurs.

Chaque flotteur peut être agencé à proximité de la barque d'un aéronef pour maintenir l'aéronef à flot, ou encore entre la partie basse 7 et la partie haute 8.

Les flotteurs peuvent être des flotteurs gonflables par un moyen de gonflage 25 du système de flottabilité 10. Dès lors, les flotteurs sont dégonflés en dehors des phases d'amerrissage. Les flotteurs peuvent notamment être pliés dans une enveloppe prévue à cet effet.

Le moyen de gonflage 25 comporte au moins un gonfleur 26 pour gonfler les flotteurs. Chaque gonfleur peut comporter un gonfleur électrique, explosif ou chimique ..

Par exemple mais non exclusivement, un gonfleur 26 est relié à une pluralité de flotteurs 15. La figure 1 illustre à l'inverse un moyen de gonflage 25 comprenant plusieurs gonfleurs 26.

On peut se référer à l'état de la technique pour trouver des exemples de réalisation des flotteurs et de moyens de gonflage de ces flotteurs.

De plus, le système de flottabilité est pourvu d'au moins un système de commande 19 pour commander au moins un gonfleur. Ce système de commande 19 est alors relié à au moins un gonfleur 26 pour requérir le gonflage des flotteurs 15.

La figure 2 illustre un système de commande 19 selon l'invention.

Ce système de commande 19 comporte un calculateur 20. Le calculateur 20 est relié au moyen de gonflage 25, par exemple à chaque gonfleur 26.

Le calculateur 20 peut comprendre par exemple au moins un processeur, au moins un circuit intégré, au moins un système programmable, au moins un circuit logique, ces exemples ne limitant pas la portée donnée à l'expression « calculateur ».

Selon l'exemple représenté, le calculateur 20 comporte au moins un processeur 21 exécutant des instructions mémorisées sur une mémoire 22 pour commander les gonfleurs.

De plus, divers organes peuvent être reliés au calculateur 20 selon les variantes implémentées.

Ainsi, le calculateur 20 peut communiquer avec un système de positionnement 40 permettant de déterminer la position et le mouvement de l'aéronef dans l'espace. Ce mouvement peut être obtenu en déterminant des vitesses de l'aéronef, des accélérations de l'aéronef, la hauteur de l'aéronef...

Le terme « hauteur » est à comprendre au sens large. En effet, le terme « hauteur » peut faire référence à la hauteur en tant quelle de l'aéronef ou à l'altitude de l'aéronef, la signification de ce terme dépendant des instruments de mesure utilisés.

Ce système de positionnement 40 peut alors comprendre une unité inertielle de mesures 41 et/ou un moyen de localisation par satellites 42 et/ou une radiosonde 43 par exemple.

Usuellement, une unité inertielle de mesures 41 comporte au moins trois accéléromètres ainsi qu'au moins trois gyromètres.

Par exemple, le moyen de localisation par satellites 42 eut comprendre un récepteur d'un système connu sous l'acronyme GPS ou équivalent.

En outre, le calculateur 20 peut être relié à une unité de navigation 45 pour déterminer la position de l'aéronef par rapport à une route à suivre. Classiquement, une telle route comporte un segment de décollage, au moins un segment de croisière et un segment d'atterrissage.

Une unité de navigation peut comprendre un processeur ou équivalent ainsi qu'une mémoire stockant des cartes pour permettre à un utilisateur de programmer la route à suivre.

De plus, le calculateur 20 peut être relié à un système 50 permettant d'établir si l'aéronef effectue un vol en autorotation. Ce système 50 peut être un système de mesure de vitesse de rotation comprenant un premier capteur de mesure 51 mesurant une vitesse de rotation du rotor de sustentation 9 et/ou au moins un deuxième capteur de mesure 52 mesurant une vitesse de rotation d'une turbine de détente d'un moteur.

Par ailleurs, le calculateur 20 peut être relié à des organes 36 permettant de mettre en oeuvre des modes dits « modes de gonflage complémentaires ». Ainsi, le calculateur 20 peut être relié à au moins un capteur d'immersion 36 et/ou à un organe de commande 37 manoeuvrable manuellement pour ordonner le gonflage de chaque flotteur. Un tel organe de commande 37 peut prendre la forme d'un bouton poussoir, rotatif, à bascule... un capteur d'immersion peut prendre la forme d'un capteur détectant la présence d'eau.

En outre, le calculateur 20 peut être relié à un moyen d'autorisation de gonflage 30 manoeuvrable manuellement pour armer/désarmer le système de flottabilité. Le moyen d'autorisation de gonflage 30 peut prendre la forme d'un bouton poussoir, rotatif, à bascule...

Enfin, le calculateur 20 peut être relié à un système de détermination 35 permettant d'estimer la masse de l'aéronef. Le système de détermination 35 inclut par exemple un débitmètre 57 et une mémoire 56 mémorisant une masse à vide et une masse volumique du carburant utilisé.

Deux éléments différents du système de commande peuvent constituer conjointement un seul et même équipement.

En référence à la figurez 3, l'aéronef 1 se situe à chaque instant en vol à une altitude h0, en particulier au dessus d'une surface liquide 200. La portance de l'aéronef 1 exercée par exemple par un rotor de sustentation 9 peut comporter une composante Fz dirigée selon la pesanteur.

Un constructeur peut déterminer la portance maximale Fzmax de l'aéronef.

Cet aéronef évolue avec une vitesse sol $\overline{V0}$. Le vecteur représentant la vitesse sol peut être décomposé au moins en une composante de vitesse courante horizontale Vx0 et une composante de vitesse courante en élévation Vz0 dirigée selon la pesanteur. La composante de vitesse courante horizontale Vx0 représente la composante du vecteur représentant la vitesse sol dans un plan horizontal 101 perpendiculaire à la pesanteur.

Eventuellement, l'aéronef risque d'impacter la surface liquide 200 à l'issue d'une durée ΔT. Cet impact 500 est représenté par une croix sur la figure 3 et se produit avec une vitesse d'impact ayant une composante horizontale Vimpactx non nulle dans un plan d'impact 102. Le plan d'impact 102 est horizontal et donc orthogonal à la pesanteur au niveau de l'impact.

Dès lors, le système de commande applique le procédé selon l'invention pour gonfler les flotteurs 15 afin de maintenir à flot l'aéronef 1 suite à un amerrissage.

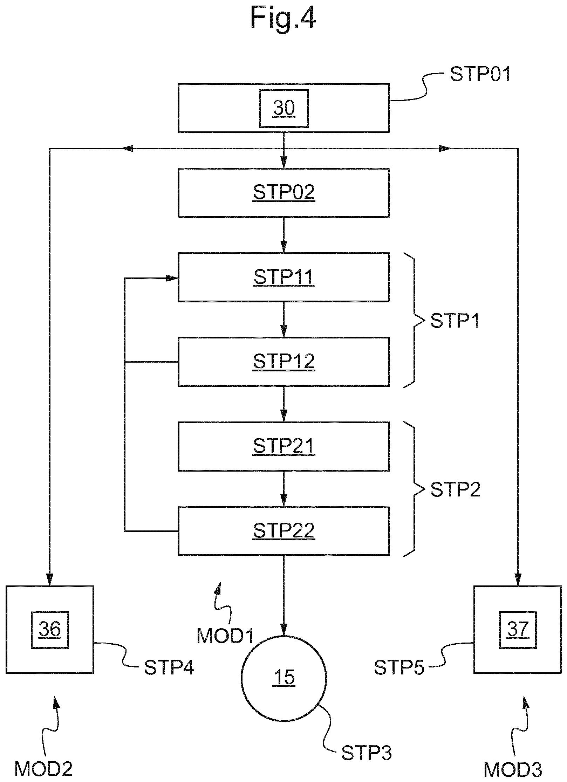

En référence à la figure 4, le procédé peut comporter un mode de gonflage automatique en vol MOD1, voire un mode de gonflage manuel MOD2 durant lequel le gonflage d'un flotteur 15 est commandé manuellement par un individu et/ou un mode de gonflage automatique après impact MOD3.

Préalablement à la mise en oeuvre de l'un de ces modes de fonctionnement, le procédé peut comporter une étape préliminaire d'armement STP01.

Cette étape préliminaire d'armement STP01 vise à déterminer si le gonflage des flotteurs 15 est autorisé. Dans la négative, le système de flottabilité est désarmé. Dès lors, lorsque le système de flottabilité est armé, le moyen de gonflage 25 est susceptible de déployer chaque flotteur 15, alors qu'à l'inverse le gonflage des flotteurs est interdit lorsque le système de flottabilité n'est pas armé. Par exemple, les gonfleurs sont inhibés en n'étant pas alimentés électriquement.

Par conséquent, le calculateur peut surveiller le moyen d'autorisation de gonflage 30 durant une première étape d'armement STP01, pour déterminer si un individu requiert l'armement.

Par suite, si un individu manoeuvre le moyen d'autorisation de gonflage 30, ce moyen d'autorisation de gonflage 30 transmet un signal d'armement au calculateur 20. L'expression « surveiller le moyen d'autorisation de gonflage 30 » signifie que le calculateur 20 surveille les ordres transmis par la moyen d'autorisation de gonflage 30 à ce calculateur.

Si le gonflage des flotteurs est autorisé, le mode de gonflage manuel MOD2 est mis en oeuvre durant une étape manuelle STP4 lorsqu'un individu manoeuvre un organe de commande 37. L'organe de commande 37 envoie alors un signal au calculateur 20, le calculateur requérant le gonflage des flotteurs 15.

Si le gonflage des flotteurs est autorisé, le mode de gonflage automatique après impact MOD3 est mis en oeuvre durant une étape après immersion STP5 lorsqu'au moins un capteur d'immersion détecte une immersion. Chaque capteur d'immersion 36 concerné envoie alors un signal au calculateur 20, le calculateur requérant le gonflage des flotteurs 15.

Si le gonflage des flotteurs est autorisé, le mode de gonflage automatique en vol MOD1 peut permettre de gonfler automatiquement en vol chaque flotteur 15 dans des conditions prédéterminées.

Durant une deuxième étape d'armement STP02 optionnelle, le calculateur 20 peut solliciter l'unité de navigation 45 et le système de positionnement 40 pour déterminer à chaque instant de calcul si l'aéronef suit un segment de décollage ou un segment d'atterrissage de la route suivie. Dans l'affirmatif, le mode de gonflage automatique en vol MOD1 est inhibé.

De manière complémentaire ou alternative, le calculateur inhibe le mode de gonflage automatique en vol MOD1 durant une phase d'autorotation.

Ainsi, le calculateur 20 surveille le rotor de sustentation 9 pour déterminer si l'aéronef 1 est dans une phase d'autorotation.

Par suite, le calculateur 20 détermine si la vitesse de rotation du rotor de sustentation est supérieure à la vitesse de rotation de l'arbre de puissance de chaque moteur en sollicitant le système de mesure de vitesse 50. Dans l'affirmative, le mode de gonflage automatique en vol MOD1 est inhibé.

Si le mode de gonflage automatique en vol MOD1 n'est pas inhibé, durant une première étape STP11 d'une étape de prédiction d'un impact à venir avec une surface liquide STP1, le calculateur 20 détermine si une condition d'amerrissage prédéterminée est vérifiée.

Par exemple, le calculateur détermine à chaque instant de calcul si l'inégalité suivante est vérifiée :

$$\frac{1}{2} M \, Vz0^2 + Mg \, h0 > h0 \, Fzmax$$

où « M » représente une masse courante de l'aéronef audit instant de calcul, « $Vz0^2$ » représente le carré de ladite composante de vitesse courante en élévation de l'aéronef audit instant de calcul, « g » représente l'accélération de la pesanteur, « h0 » représente la hauteur de l'aéronef audit instant de calcul, « Fzmax » représente une constante relative à une portance maximale de l'aéronef, « > » représente le signe supérieur d'une inégalité, « + » représente le signe de l'addition.

A cet effet, le calculateur peut solliciter le système de positionnement 40 pour déterminer la valeur de la composante de la vitesse courante en élévation et la hauteur h0, la constante Fzmax étant mémorisée par exemple dans le calculateur.

La masse M peut être une masse moyenne mémorisée, ou peut être évaluée à chaque instant de calcul.

Par exemple, une masse initiale Mini et une masse volumique du carburant sont mémorisées dans le calculateur ou dans une mémoire annexe.

Dès lors, à chaque instant de calcul, le calculateur détermine la masse consommée Mcons du carburant consommé par les moteurs. Cette masse consommée Mcons peut être calculée en permanence au travers de la masse volumique du carburant ainsi que du débit de carburant transmis au moteur et mesuré par le débitmètre 57.

Par suite, le calculateur en déduit la masse courante M de l'aéronef en soustrayant la masse consommée Mcons à la masse initiale Mini selon la soustraction suivante : M= Mini-Mcons.

Eventuellement, durant une deuxième étape STP12 de l'étape de prédiction d'un impact à venir SPT1, le calculateur 20 détermine si l'aéronef 1 se déplace vers une surface liquide 200.

A cet effet, le calculateur peut solliciter le système de positionnement pour déterminer si la composante de la vitesse courante en élévation de l'aéronef est dirigée vers la surface liquide 200.

A l'instant de calcul considéré, le déroulement du mode de gonflage en vol MOD1 se poursuit si la condition d'amerrissage est vérifiée, et éventuellement si l'aéronef se déplace vers une surface liquide.

De plus, durant une première phase STP 21 d'une étape de caractérisation de l'impact à venir STP2, au moins une composante prédite Vimpactx, Vimpactz d'une vitesse d'amerrissage est déterminée. Chaque composante prédite Vimpactx, Vimpactz représente une vitesse estimée de l'aéronef 1 selon une direction particulière de l'aéronef représentée par la pesanteur et le plan d'impact horizontal.

Chaque composante prédite peut donc être une composante prédite horizontale Vimpactx présente dans un plan d'impact parallèle au plan horizontal courant 101 ou une composante prédite en élévation Vimpactz selon la pesanteur.

Pour déterminer une composante prédite, le calculateur peut déterminer une durée représentant le temps estimé restant à s'écouler avant l'impact avec la surface liquide en résolvant l'équation suivante :

$$\text{Gamma}\,\frac{\Delta T^2}{2} + V0\,\Delta T + h0 = 0$$

où « gamma » représente une composante de l'accélération courante de l'aéronef selon ladite direction particulière, « $\Delta T$ » représente ledit temps estimé, « $\Delta T^2$ » représente le carré dudit temps estimé, « V0 » représente ladite composante de la vitesse courante de l'aéronef selon ladite direction particulière audit instant de calcul, « h0 » représente la hauteur de l'aéronef audit instant de calcul.

Dès lors, le calculateur 20 peut déterminer la composante prédite de la vitesse d'amerrissage prédite en fonction du temps estimé selon l'équation suivante :

$$\text{Vimpact} = \text{gamma}\,\Delta T + V0$$

où « Vimpact » représente ladite composante prédite de la vitesse d'amerrissage selon ladite direction particulière.

De manière alternative ou complémentaire, au moins une composante prédite de vitesse estimée d'impact est égale à la composante de vitesse courante correspondante.

Dès lors, durant une deuxième phase STP 22 d'une étape de caractérisation de l'impact à venir STP2, chaque composante prédite est comparée à un seuil de vitesse. Par exemple, la composante prédite horizontale Vimpactx est comparée à un seuil de vitesse horizontal égale à 30 noeuds, la composante prédite en élévation Vimpactz étant comparée à un seuil de vitesse en élévation égale à 1.5 mètre par seconde.

Si chaque composante prédite est inférieure au seuil de vitesse correspondant, une étape de gonflage automatique STP3 peut être mise en oeuvre. Durant cette étape de gonflage automatique STP3, le calculateur 20 ordonne au moyen de gonflage 25 de gonfler les flotteurs.

Par suite, durant l'étape de gonflage automatique STP3, chaque flotteur 15 est automatiquement gonflé en vol par le moyen de gonflage 25 lorsqu'au moins les deux conditions suivantes sont simultanément remplies : ladite condition d'amerrissage est vérifiée, chaque composante prédite déterminée est inférieure au seuil de vitesse correspondant. Eventuellement, le gonflage est aussi conditionné par une troisième condition qui consiste à vérifier que l'aéronef se déplace vers une surface liquide.

Par suite, lorsque le système de flottabilité est armé et si le mode de gonflage manuel MOD2 n'est pas inhibé, le calculateur 20 applique les étapes du mode de gonflage manuel MOD2 pour déterminer si les flotteurs doivent être gonflés.

En parallèle, le calculateur 20 applique le mode de gonflage manuel MOD2 en surveillant durant une étape de surveillance STP5 la manoeuvre éventuelle de l'organe de commande 37.

Si les flotteurs ne sont pas gonflés en vol et suite à un amerrissage, le calculateur 20 applique le mode de gonflage manuel MOD2 en surveillant la manoeuvre éventuelle de l'organe de commande 37.

En parallèle, le calculateur peut gonfler les flotteurs après l'amerrissage par le biais du mode de gonflage automatique après impact MOD3, dès la détection d'une détection d'immersion par le biais d'au moins un capteur d'immersion lors d'une étape de surveillance STP4.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, la figure 4 illustre une étape de caractérisation d'un impact STP2 réalisée après une étape de prédiction d'un impact à venir avec une surface liquide STP1. Toutefois, ces étapes peuvent être réalisées dans un ordre différent voire en même temps.

**Revendications**

**1.** Procédé de commande pour commander un système de flottabilité (10) pour aéronef (1), ledit aéronef (1) présentant à chaque instant un vecteur de vitesse sol ayant dans un référentiel (300) une composante de vitesse courante en élévation selon un axe en élévation dirigé selon la pesanteur et une composante de vitesse courante horizontale selon un plan horizontal perpendiculaire à ladite pesanteur, ledit système de flottabilité (10) comportant au moins un flotteur (15) et un moyen de gonflage (25) pour gonfler chaque flotteur (15), ce procédé comportant un mode de gonflage automatique en vol (MOD1) pour gonfler automatiquement en vol chaque flotteur (15) présentant l'étape suivante:

    - durant une étape de prédiction d'un impact à venir avec une surface liquide (STP1), un calculateur (20) détermine si une condition d'amerrissage prédéterminée est vérifiée,

**caractérisé en ce que** :

    - durant une étape de caractérisation dudit impact (STP2), au moins une composante prédite (Vimpactx, Vimpactz) d'une vitesse d'amerrissage est déterminée, chaque composante prédite (Vimpactx, Vimpactz) représentant une vitesse estimée de l'aéronef (1) lors dudit impact selon la pesanteur ou dans un plan d'impact perpendiculaire à la pesanteur,
    - durant une étape de gonflage automatique (STP3), chaque flotteur (15) est automatiquement gonflé en vol par ledit moyen de gonflage (25) lorsqu'au moins les deux conditions suivantes sont simultanément remplies :

        o ladite condition d'amerrissage est vérifiée,
        o chaque composante prédite (Vimpactx, Vimpactz) déterminée est inférieure à un seuil de vitesse correspondant.

**2.** Procédé selon la revendication 1,
caractérisé en ce ledit procédé applique au moins un mode de gonflage complémentaire concomitamment à l'application du mode de gonflage automatique (MOD1), au moins un mode de gonflage complémentaire étant à choisir dans une liste comprenant un mode de gonflage manuel (MOD2) durant lequel le gonflage d'un flotteur (15) est commandé manuellement par un individu et un mode de gonflage automatique après impact (MOD3) durant lequel le gonflage d'un flotteur (15) est commandé par au moins un capteur d'immersion (36).

**3.** Procédé selon l'une quelconque des revendications 1 à 2,
**caractérisé en ce qu'**avant de gonfler un flotteur (15), le calculateur (20) détermine si le gonflage d'un flotteur (15) est autorisé en surveillant un moyen d'autorisation de gonflage (30) manoeuvrable manuellement, aucun flotteur (15) ne pouvant être gonflé si le moyen d'autorisation de gonflage (30) n'est pas manoeuvré.

**4.** Procédé selon l'une quelconque des revendications 1 à 3,
**caractérisé en ce que**, ledit aéronef (1) comportant une unité de navigation (45) mémorisant une route suivie, ladite route comprenant un segment de décollage ainsi qu'au moins un segment de croisière et un segment d'atterrissage, le calculateur (20) détermine si le gonflage d'un flotteur (15) est autorisé en surveillant la position de l'aéronef (1) par rapport à ladite route, ledit mode de gonflage automatique en vol (MOD1) est inhibé si l'aéronef (1) se trouve dans ledit segment de décollage ou ledit segment d'atterrissage.

**5.** Procédé selon l'une quelconque des revendications 1 à 4,
**caractérisé en ce que** ledit aéronef (1) comportant un rotor de sustentation (9) entraîné en rotation par au moins un moteur (110) hors phase d'autorotation, le calculateur (20) surveille le fonctionnement du rotor de sustentation (9) pour déterminer si l'aéronef (1) est dans une phase d'autorotation, ledit mode de gonflage automatique en vol (MOD1) étant inhibé durant ladite phase d'autorotation.

**6.** Procédé selon l'une quelconque des revendications 1 à 5,
**caractérisé en ce que** durant ladite étape de prédiction d'un impact à venir avec une surface liquide (STP1), ledit calculateur (20) détermine si l'aéronef (1) se déplace vers une surface liquide (200), ledit flotteur (15) étant automatiquement gonflé en vol durant l'étape de gonflage automatique (STP3) par ledit moyen de gonflage (25) lorsque les trois conditions suivantes sont simultanément remplies :

- ○ ladite condition d'amerrissage est vérifiée,
- ○ l'aéronef se déplace vers une surface liquide,
- ○ chaque composante prédite déterminée est inférieure au seuil de vitesse correspondant.

**7.** Procédé selon l'une quelconque des revendications 1 à 6,
**caractérisé en ce que** durant l'étape de prédiction d'un impact à venir avec une surface liquide (STP1) le calculateur (20) considère que l'aéronef (1) se déplace vers une surface liquide (200) si ladite composante de vitesse courante en élévation est dirigée vers la surface liquide (200).

**8.** Procédé selon l'une quelconque des revendications 1 à 7,
**caractérisé en ce que**, à chaque instant de calcul, ladite condition d'amerrissage est vérifiée lorsque l'inégalité suivante est vérifiée :

$$\frac{1}{2}\,\text{M}\,\text{Vz0}^2 + \text{Mg}\,\text{h0} > \text{h0}\,\text{Fzmax}$$

où « M » représente une masse courante de l'aéronef audit instant de calcul, « $Vz0^2$ » représente le carré de ladite composante de vitesse courante en élévation audit instant de calcul, « g » représente l'accélération de la pesanteur, « h0 » représente la hauteur de l'aéronef audit instant de calcul, « Fzmax » représente une constante relative à une portance maximale de l'aéronef, « > » représente le signe supérieur d'une inégalité, « + » représente le signe de l'addition.

**9.** Procédé selon la revendication 8,
**caractérisé en ce que**, ledit aéronef (1) comprenant au moins un moteur (110) et un système de carburant (130) qui alimente en carburant chaque moteur (110) selon un débit de carburant, ladite masse courante (M) est déterminée à chaque instant de calcul en réalisant les étapes suivantes :

- détermination de la masse initiale (Mini) de l'aéronef (1) avant le démarrage des moteurs,
- détermination d'une masse consommée (Mcons) du carburant consommé depuis ledit démarrage,
- détermination de la masse courante (M) de l'aéronef (1) audit instant de calcul en soustrayant ladite masse consommé (Mcons) à ladite masse initiale (Mini).

**10.** Procédé selon l'une quelconque des revendications 1 à 9,
**caractérisé en ce que** chaque composante prédite à déterminer est à choisir dans une liste comprenant une composante prédite horizontale (Vimpactx) et une composante prédite en élévation (Vimpactz) respectivement dans ledit plan d'impact et selon la pesanteur.

**11.** Procédé selon la revendication 10,
**caractérisé en ce que**, à chaque instant de calcul, au moins une composante prédite de la vitesse d'amerrissage selon une direction dite « direction particulière » par commodité est déterminée en réalisant les étapes suivantes :

- détermination du temps estimé restant à s'écouler avant ledit impact avec la surface liquide en résolvant l'équation suivante :

$$\text{Gamma}\,\frac{\Delta\text{T}^2}{2} + \text{V0}\,\Delta\text{T} + \text{h0} = 0$$

où « gamma » représente une composante d'une accélération courante de l'aéronef selon ladite direction particulière, « $\Delta T$ » représente ledit temps estimé, « $\Delta T^2$ » représente le carré dudit temps estimé, « V0 » représente ladite composante de vitesse courante de l'aéronef selon ladite direction particulière audit instant de calcul, « h0 » représente la hauteur de l'aéronef audit instant de calcul,
- détermination de la composante prédite de la vitesse d'amerrissage prédite selon ladite direction particulière en fonction dudit temps estimé selon l'équation suivante :

$$\text{Vimpact} = \text{gamma } \Delta T + V0$$

où « Vimpact » représente ladite composante prédite de la vitesse d'amerrissage selon ladite direction particulière.

12. Procédé selon l'une quelconque des revendications 10 à 11,
**caractérisé en ce que**, à chaque instant de calcul, au moins une composante prédite de la vitesse d'amerrissage selon une direction particulière est rendue égale à la composante de vitesse courante selon cette direction particulière.

13. Procédé selon l'une quelconque des revendications 10 à 12,
**caractérisé en ce que** ledit seuil de vitesse (SX) correspondant à la composante prédite horizontale (Vimpactx) est égal à 30 noeuds.

14. Procédé selon l'une quelconque des revendications 10 à 13,
**caractérisé en ce que** ledit seuil de vitesse (SZ) correspondant à la composante prédite en élévation (Vimpactz) est égal à 1.5 mètre par seconde.

15. Système de flottabilité (10) comportant au moins un flotteur (15) et un moyen de gonflage (25) pour gonfler chaque flotteur (15), ledit système de flottabilité (10) ayant un système de commande (19) pour donner un ordre de gonflage de chaque flotteur (15) au moyen de gonflage (25),
**caractérisé en ce que** ledit système de commande (19) est muni d'un calculateur (20) appliquant le procédé selon l'une quelconque des revendications 1 à 14.

16. Aéronef (1),
**caractérisé en ce que** ledit aéronef (1) comporte un système de flottabilité (10) selon la revendication 15.

**Patentansprüche**

1. Steuerungsverfahren zum Steuern eines Auftriebssystems (10) für ein Luftfahrzeug (1), wobei das Luftfahrzeug (1) zu jeder Zeit einen Vektor der Geschwindigkeit über dem Boden aufweist, der in einem Bezugssystem (300) eine aktuelle Geschwindigkeitskomponente in Höhenrichtung entlang einer Achse in Höhenrichtung, die nach der Schwerkraft ausgerichtet ist, aufweist, und eine aktuelle horizontale Geschwindigkeitskomponente in einer horizontalen Ebene, die senkrecht zu der Schwerkraft verläuft, wobei das Auftriebssystem (10) mindestens einen Schwimmer (15) und Aufblasmittel (25) zum Aufblasen eines jedes Schwimmers (15) aufweist, wobei das Verfahren einen Modus zum automatischen Aufblasen während des Flugs (MOD1) aufweist zum automatischen Aufblasen eines jeden Schwimmers (15) während des Flugs, wobei der Modus folgenden Schritt aufweist:

   - während eines Schrittes der Vorhersage eines zukünftigen Auftreffens auf einer Flüssigkeitsoberfläche (STP1) bestimmt ein Rechner (20), ob eine vorbestimmte Wasserlandungsbedingung erfüllt ist,

   **dadurch gekennzeichnet, dass**

   - während eines Schrittes der Charakterisierung des Auftreffens (STP2) mindestens eine vorhergesagte Komponente (Vimpactx, Vimpactz) einer Wasserlandungsgeschwindigkeit bestimmt wird, wobei jede vorhergesagte Komponente (Vimpactx, Vimpactz) eine geschätzte Geschwindigkeit des Luftfahrzeugs (1) darstellt, während des Auftreffens in Schwerkraftrichtung oder in einer Auftreffebene senkrecht zu der Schwerkraft,
   - während eines Schrittes des automatischen Aufblasens (STP3), jeder Schwimmer (15) im Flug automatisch durch das Aufblasmittel (25) aufgeblasen wird, wenn mindestens zwei folgende Bedingungen gleichzeitig erfüllt sind:

      ∘ die Bedingung der Wasserlandung ist bestätigt,
      ∘ jede bestimmte vorhergesagte Komponente (Vimpactx, Vimpactz) ist kleiner als ein entsprechender Geschwindigkeitsschwellenwert.

2. Verfahren nach Anspruch 1,

**dadurch gekennzeichnet, dass**

das Verfahren mindestens einen zusätzlichen Aufblasmodus gleichzeitig zu der Anwendung des automatischen Aufblasmodus (MOD1) anwendet, wobei mindestens ein zusätzlicher Aufblasmodus aus einer Liste auszuwählen ist, die einen manuellen Aufblasmodus (MOD2) enthält, bei dem das Aufblasen eines Schwimmers (15) manuell durch eine Person gesteuert wird, und einen Modus zum automatischen Aufblasen nach dem Auftreffen (MOD3), bei dem das Aufblasen des Schwimmers (15) durch mindestens einen Eintauchsensor (36) gesteuert wird.

3. Verfahren nach einem der Ansprüche 1 bis 2,
**dadurch gekennzeichnet, dass**
vor dem Aufblasen eines Schwimmers (15) der Rechner (20) bestimmt, ob das Aufblasen eines Schwimmers (15) genehmigt ist, durch Überwachen eines Mittels (30) zur Genehmigung des Aufblasens, welches manuell betätigbar ist, wobei kein Schwimmer (15) aufgeblasen werden kann, wenn das Mittel (30) zur Genehmigung des Aufblasens nicht betätigt worden ist.

4. Verfahren nach einem der Ansprüche 1 bis 3,
**dadurch gekennzeichnet, dass**
das Luftfahrzeug (1) eine Navigationseinheit (45) aufweist, die einen gefolgten Kurs speichert, wobei der Kurs ein Abhebe-Segment, sowie mindestens ein Flugsegment und ein Landesegment aufweist, wobei der Rechner (20) bestimmt, ob das Aufblasen eines Schwimmers (15) genehmigt ist, indem er die Position des Luftfahrzeugs (1) relativ zu diesem Kurs überwacht, wobei der Modus des automatischen Aufblasens während des Flugs (MOD1) verhindert wird, wenn das Luftfahrzeug sich in dem Abhebe-Segment oder dem Lande-Segment befindet.

5. Verfahren nach einem der Ansprüche 1 bis 4,
**dadurch gekennzeichnet, dass**
das Luftfahrzeug (1) einen Auftriebsrotor (9) aufweist, der von mindestens einem Motor (110) zu einer Drehbewegung angetrieben wird, außerhalb einer Phase der Autorotation, wobei der Rechner (20) den Betrieb des Auftriebsrotors (9) überwacht, um zu bestimmen, ob das Luftfahrzeug (1) sich einer Phase der Autorotation befindet, wobei der Modus des automatischen Aufblasens während des Flugs (MOD1) während dieser Autorotationsphase verhindert wird.

6. Verfahren nach einem der Ansprüche 1 bis 5,
**dadurch gekennzeichnet, dass**
während des Schrittes der Vorhersage eines zukünftigen Auftreffens auf einer Flüssigkeitsoberfläche (STP1) der Rechner (20) bestimmt, ob das Luftfahrzeug (1) sich auf eine Flüssigkeitsoberfläche (200) zubewegt, wobei der Schwimmer (15) automatisch im Flug während des Schrittes des automatischen Aufblasens (STP3) durch das Aufblasmittel (25) aufgeblasen wird, wenn die folgenden drei Bedingungen gleichzeitig erfüllt sind:

  ◦ die Bedingung der Wasserlandung ist bestätigt,
  ◦ das Luftfahrzeug bewegt sich auf eine Flüssigkeitsoberfläche zu,
  ◦ jede vorhergesagte bestimmte Komponente ist kleiner als der entsprechende Geschwindigkeitsschwellenwert.

7. Verfahren nach einem der Ansprüche 1 bis 6,
**dadurch gekennzeichnet, dass**
während des Schrittes der Vorhersage eines zukünftigen Auftreffens auf einer Flüssigkeitsoberfläche (STP1) der Rechner (20) davon ausgeht, dass das Luftfahrzeug (1) sich auf eine Flüssigkeitsoberfläche (200) zubewegt, wenn die aktuelle Geschwindigkeitskomponente in Höhenrichtung auf die Flüssigkeitsoberfläche (200) gerichtet ist.

8. Verfahren nach einem der Ansprüche 1 bis 7,
**dadurch gekennzeichnet, dass**
zu jedem Zeitpunkt der Berechnung die Bedingung der Wasserlandung bestätigt wird, wenn die folgende Ungleichung bestätigt ist:

$$\frac{1}{2}M \; Vz0^2 + Mg \; h0 > h0 \; Fzmax$$

wobei "M" die aktuelle Masse des Luftfahrzeugs im Moment der Berechnung darstellt, "$Vz0^2$" das Quadrat der aktuellen Geschwindigkeitskomponente in Höhenrichtung zum Zeitpunkt der Berechnung darstellt, "g" die Fallbeschleunigung bezeichnet, "hO" die Höhe des Luftfahrzeugs zum Zeitpunkt der Berechnung bezeichnet, "Fzmax" eine Konstante bezüglich eines maximalen Auftriebs des Luftfahrzeugs bezeichnet, ">" das Zeichen "größer" in einer Ungleichung darstellt, "+" das Additionszeichen darstellt.

9. Verfahren nach Anspruch 8,
**dadurch gekennzeichnet, dass**
das Luftfahrzeug (1) mindestens einen Motor (110) und ein Kraftstoffsystem (130), welches den Motor (110) mit Kraftstoff versorgt, aufweist, wobei je nach Kraftstoffverbrauch die aktuelle Masse (M) zu jedem Zeitpunkt der Berechnung bestimmt wird, indem folgende Schritte durchgeführt werden:

- Bestimmung der ursprünglichen Masse (Mini) des Luftfahrzeugs (1) vor dem Starten des Motors,
- Bestimmung einer verbrauchten Treibstoffmenge (Mcons) seit dem Start,
- Bestimmung der aktuellen Masse (M) des Luftfahrzeugs (1) zum Zeitpunkt der Berechnung durch Subtraktion der verbrauchten Menge (Mcons) von der ursprünglichen Menge (Mini).

10. Verfahren nach einem der Ansprüche 1 bis 9,
**dadurch gekennzeichnet, dass**
jede zu bestimmende vorhergesagte Komponente auszuwählen ist aus einer Liste, die eine vorhergesagte horizontale Komponente (Vimpactx) und eine vorhergesagte Komponente in Höhenrichtung (Vimpactz), jeweils in der Auftreffebene und entlang der Schwerkraft, umfasst.

11. Verfahren nach Anspruch 10,
**dadurch gekennzeichnet, dass**
zu jedem Zeitpunkt der Berechnung mindestens eine vorhergesagte Komponente der Wasserlandungsgeschwindigkeit in einer "spezielle Richtung" genannten Richtung vereinfacht bestimmt wird, indem folgende Schritte ausgeführt werden:

- Bestimmung der geschätzten verbleibenden Zeit vor dem Auftreffen auf der Flüssigkeitsoberfläche durch Lösung folgender Gleichung:

$$\text{Gamma } \frac{\Delta T^2}{2} + \text{V0 } \Delta T + \text{h0} = 0 \ ,$$

wobei "gamma" eine Komponente einer aktuellen Beschleunigung des Luftfahrzeugs entlang der speziellen Richtung bezeichnet, "$\Delta T$" die geschätzte Zeitdauer darstellt, "$\Delta T^2$" das Quadrat der geschätzten Zeitdauer darstellt, "V0" die aktuelle Geschwindigkeitskomponente des Luftfahrzeugs in der speziellen Richtung in dem Berechnungszeitpunkt darstellt, "h0" die Höhe des Luftfahrzeugs im Berechnungszeitpunkt bezeichnet,
- Bestimmung der vorhergesagten Komponente der Geschwindigkeit der vorhergesagten Wasserlandung in der speziellen Richtung in Abhängigkeit von der geschätzten Zeit gemäß der folgenden Gleichung:

$$\text{Vimpact} = \text{gamma } \Delta T + \text{V0,}$$

wobei "Vimpact" die vorhergesagte Komponente der Geschwindigkeit der Wasserlandung in der speziellen Richtung bezeichnet.

12. Verfahren nach einem der Ansprüche 10 bis 11,
**dadurch gekennzeichnet, dass**
zu jedem Berechnungszeitpunkt mindestens eine vorhergesagte Komponente der Geschwindigkeit der Wasserlandung in einer speziellen Richtung der aktuellen Geschwindigkeitskomponente in der speziellen Richtung gleichgesetzt wird.

13. Verfahren nach einem der Ansprüche 10 bis 12,
**dadurch gekennzeichnet, dass**
der Geschwindigkeitsschwellenwert (SX), der der vorhergesagten horizontalen Komponente (Vimpactx) entspricht, 30 Knoten beträgt.

**14.** Verfahren nach einem der Ansprüche 10 bis 13,
**dadurch gekennzeichnet, dass**
der Geschwindigkeitsschwellenwert (SZ), der der vorhergesagten Komponente in Höhenrichtung (Vimpactz) entspricht, 1,5 Meter pro Sekunde beträgt.

**15.** Auftriebssystem (10) mit mindestens einem Schwimmer (15) und einem Aufblasmittel (25) zum Aufblasen eines jeden Schimmers (15), wobei das Auftriebssystem (10) ein Steuersystem (19) aufweist zum Erteilen eines Befehls zum Aufblasen eines jeden Schwimmers (15) mit dem Aufblasmittel (25),
**dadurch gekennzeichnet, dass**
das Steuersystem (19) mit einem Rechner (20) versehen ist, der das Verfahren nach einem der Ansprüche 1 bis 14 ausführt.

**16.** Luftfahrzeug (1),
**dadurch gekennzeichnet, dass**
das Luftfahrzeug (1) ein Auftriebssystem (10) nach Anspruch 15 aufweist.


**Claims**

**1.** A control method for controlling a buoyancy system (10) for an aircraft (1), said aircraft (1) at each moment having a ground speed vector having in a reference frame (300) a component of current speed in elevation along an axis in elevation which is directed in the direction of gravity and a component of current horizontal speed along a horizontal plane perpendicular to said direction of gravity, said buoyancy system (10) comprising at least one float (15) and an inflation means (25) for inflating each float (15), this method comprising a mode of automatic inflation during flight (MOD1) for automatically inflating each float (15) during flight, having the following step:

- during a step of predicting a forthcoming impact with a liquid surface (STP1), a computer (20) determines whether a predetermined ditching condition is complied with,

**characterised in that**:

- during a step of characterising said impact (STP2), at least one predicted component (Vimpactx, Vimpactz) of a ditching speed is determined, each predicted component (Vimpactx, Vimpactz) representing an estimated speed of the aircraft (1) upon said impact in the direction of gravity or in an impact plane perpendicular to the direction of gravity,
- during an automatic inflation step (STP3), each float (15) is automatically inflated during flight by said inflation means (25) when at least the following two conditions are met simultaneously:

  ◦ said ditching condition is complied with,
  ◦ each predicted component (Vimpactx, Vimpactz) determined is less than a corresponding speed threshold.

**2.** A method according to Claim 1,
**characterised in that** said method applies at least one complementary inflation mode concomitantly with the application of the automatic inflation mode (MOD1), at least one complementary inflation mode being selected from a list comprising a manual inflation mode (MOD2) during which the inflation of a float (15) is controlled manually by an individual and a mode of automatic inflation after impact (MOD3) during which the inflation of a float (15) is controlled by at least one immersion sensor (36).

**3.** A method according to any one of Claims 1 to 2,
**characterised in that** prior to inflating a float (15), the computer (20) determines whether the inflation of a float (15) is permitted by monitoring an inflation authorisation means (30) which is manually operable, no float (15) being able to be inflated if the inflation authorisation means (30) is not operated.

**4.** A method according to any one of Claims 1 to 3,
**characterised in that**, said aircraft (1) comprising a navigation unit (45) which stores a followed route, said route comprising a takeoff segment and also at least one cruising segment and a landing segment, the computer (20) determines whether the inflation of a float (15) is authorised by monitoring the position of the aircraft (1) relative to said route, said automatic inflation mode during flight (MOD1) is inhibited if the aircraft (1) is in said takeoff segment or said landing segment.

5. A method according to any one of Claims 1 to 4,
**characterised in that**, said aircraft (1) comprising a lift rotor (9) driven in rotation by at least one motor (110) other than in the autorotation phase, the computer (20) monitors the operation of the lift rotor (9) in order to determine whether the aircraft (1) is in an autorotation phase, said automatic inflation mode during flight (MOD1) being inhibited during said autorotation phase.

6. A method according to any one of Claims 1 to 5,
**characterised in that** during said step of predicting a forthcoming impact with a liquid surface (STP1), said computer (20) determines whether the aircraft (1) is moving towards a liquid surface (200), said float (15) being automatically inflated during flight during the automatic inflation step (STP3) by said inflation means (25) when the following three conditions are met simultaneously:

  ◦ said ditching condition is complied with,
  ◦ the aircraft is moving towards a liquid surface,
  ◦ each predicted component determined is less than the corresponding speed threshold.

7. A method according to any one of Claims 1 to 6,
**characterised in that** during the step of predicting a forthcoming impact with a liquid surface (STP1) the computer (20) considers that the aircraft (1) is moving towards a liquid surface (200) if said component of current speed in elevation is directed towards the liquid surface (200).

8. A method according to any one of Claims 1 to 7,
**characterised in that**, at each moment of calculation, said ditching condition is complied with when the following inequation is complied with:

$$\frac{1}{2} M \, Vz0^2 + Mg \, h0 > h0 \, Fzmax$$

where "M" represents a current mass of the aircraft at said moment of calculation, "$VzO^2$" represents the square of said component of current speed in elevation at said moment of calculation, "g" represents the acceleration due to gravity, "h0" represents the height of the aircraft at said moment of calculation, "Fzmax" represents a constant relating to a maximum lift of the aircraft, ">" represents the "greater than" sign of an inequation, and "+" represents the addition sign.

9. A method according to Claim 8,
**characterised in that**, said aircraft (1) comprising at least one engine (110) and a fuel system (130) which supplies each engine (110) with fuel at a fuel flow rate, said current mass (M) is determined at each moment of calculation by performing the following steps:

  - determining the initial mass (Mini) of the aircraft (1) prior to starting the engines,
  - determining a consumed mass (Mcons) of the fuel which has been consumed since said starting,
  - determining the current mass (M) of the aircraft (1) at said moment of calculation by subtracting said consumed mass (Mcons) from said initial mass (Mini).

10. A method according to any one of Claims 1 to 9,
**characterised in that** each predicted component to be determined is to be selected from a list comprising a predicted horizontal component (Vimpactx) and a predicted component in elevation (Vimpactz) in said impact plane and in the direction of gravity respectively.

11. A method according to Claim 10,
**characterised in that**, at each moment of calculation, at least one predicted component of the ditching speed in a direction referred to as "particular direction" for convenience is determined by performing the following steps:

  - determining the estimated time remaining prior to said impact with the liquid surface by solving the following equation:

$$\text{Gamma}\,\frac{\Delta T^2}{2} + V0\,\Delta T + h0 = 0$$

wherein "gamma" represents a component of a current acceleration of the aircraft in said particular direction, "$\Delta T$" represents said estimated time, "$\Delta T^2$" represents the square of said estimated time, "V0" represents said current speed component of the aircraft in said particular direction at said moment of calculation, "h0" represents the height of the aircraft at said moment of calculation,

- determining the predicted component of the predicted ditching speed in said particular direction as a function of said estimated time in accordance with the following equation:

$$\text{Vimpact} = \text{gamma}\,\Delta T + V0$$

where "Vimpact" represents said predicted component of the ditching speed in said particular direction.

**12.** A method according to any one of Claims 10 to 11,
**characterised in that**, at each moment of calculation, at least one predicted component of the ditching speed in a particular direction is made equal to the current speed component in this particular direction.

**13.** A method according to any one of Claims 10 to 12,
**characterised in that** said speed threshold (SX) corresponding to the predicted horizontal component (Vimpactx) is equal to 30 knots.

**14.** A method according to any one of Claims 10 to 13,
**characterised in that** said speed threshold (SZ) corresponding to the predicted component in elevation (Vimpactz) is equal to 1.5 metres per second.

**15.** A buoyancy system (10) comprising at least one float (15) and an inflation means (25) for inflating each float (15), said buoyancy system (10) having a control system (19) for issuing an inflation command for each float (15) to the inflation means (25),
**characterised in that** said control system (19) is provided with a computer (20) which applies the method according to any one of Claims 1 to 14.

**16.** An aircraft (1),
**characterised in that** said aircraft (1) comprises a buoyancy system (10) according to Claim 15.

Fig.1

Fig.2

Fig.3

# Fig.4

STP01

30

STP02

STP11

STP12

STP1

STP21

STP22

STP2

36

STP4

MOD2

MOD1

15

STP3

37

STP5

MOD3

**RÉFÉRENCES CITÉES DANS LA DESCRIPTION**

**Documents brevets cités dans la description**

- FR 2959725
- FR 2997923
- WO 2006046038 A
- US 2013327890 A
- US 2014124620 A
- US 2011226898 A